# EUROPEAN PATENT SPECIFICATION

(11) **EP 4 294 100 B1**
(45) Date of publication and mention of the grant of the patent: **29.07.2026**
(21) Application number: 23208420.2
(22) Date of filing: 14.09.2018
(51) Int. Cl.: H04L 5/00, H04W 72/04, H04W 84/12, H04W 88/02, H04W 88/08, H04L 27/26, H04W 72/0453

(54) **ENHANCING CHANNEL AGGREGATION AND PUNCTURING FOR THE IEEE 802.11AX AND BEYOND**
VERBESSERUNG DER KANALAGGREGATION UND PUNKTIERUNG FÜR IEEE 802.11AX UND DARÜBER HINAUS
AMÉLIORATION DE L'AGRÉGATION ET DE LA PERFORATION DE CANAUX POUR LA NORME IEEE 802.11AX ET AU-DELÀ

(43) Date of publication of application: 20.12.2023
(62) Divisional of application: 22187776.4
(73) Proprietor: Huawei Technologies Co., Ltd., Shenzhen, Guangdong 518129 (CN)
(72) Inventor: REDLICH, Oded, 80992 Munich (DE); GAN, Ming, 80992 Munich (DE); SHILO, Shimon, 80992 Munich (DE); LI, Yunbo, 80992 Munich (DE); EPSTEIN, Leonid, 80992 Munich (DE); TSODIK, Genadiy, 80992 Munich (DE)
(74) Representative: Goddar, Heinz J.

(56) References cited:
- WO-A1-2017/027510
- WO-A1-2017/112818
- WO-A1-2018/152224
- ADRIAN P STEPHENS ET AL, 14 April 2017 (2017-04-14), US, pages 1 - 488, XP055506060, Retrieved from the Internet <URL:http://www.ieee802.org/11/private/Draft_Standards/11ax/Draft%20P802.11ax_D1.2.pdf>
- ANONYMOUS: "P802.11ax/D3.0, Jun 2018 - IEEE Draft Standard for Information Technology -- Telecommunications and Information Exchange Between Systems Local and Metropolitan Area Networks -- Specific Requirements Part 11: Wireless LAN Medium Access Control (MAC) and Physical Layer (PHY) Specifications Amendment E", 1 June 2018 (2018-06-01), XP055586579, Retrieved from the Internet <URL:https://ieeexplore.ieee.org/stampPDF/getPDF.jsp?tp=&arnumber=8424259&ref=aHR0cHM6Ly9pZWVleHBsb3JlLmllZWUub3JnL2RvY3VtZW50Lzg0MjQyNTk=> [retrieved on 20190508]

## Description

### BACKGROUND

The present invention, in some embodiments thereof, relates to enhancing wireless transmission bandwidth and, more specifically, but not exclusively, to enhancing wireless transmission bandwidth using an increased number of channel groups each comprising multiple sub-channels for carrying the wireless transmission and encoding the active sub-channels in a High Efficiency (HE) signal field accordingly.

Wireless communication in general and Wireless Local Area Networks (WLAN), e.g. Wi-Fi in particular has become a corner stone for the Internet infrastructure worldwide. Modern urban environment is completely reliant on Wi-Fi networks for serving network connectivity to an ever increasing number of network connected devices whether they be client devices (e.g. Smartphones, tablets, laptops, wearable devices, etc.), control systems, Internet of Things (IoT) devices, automotive related equipment and/or the like. The challenge is further increased with the recent deployment of massive IoT devices arrays, smart cities infrastructure and automated systems and services.

The IEEE 802.11 protocol specification defining the Wi-Fi communication protocols is constantly evolving to support the increasing data transmission capacity needs and the dense environment serving large numbers of connected devices.

The IEEE 802.11ac protocol specification released in 2013 and the emerging IEEE 802.11ax and beyond protocols specifications attempt to address the increasing communication requirements by introducing High Efficiency (HE) and Extreme High Throughput (EHT) features and techniques for sharing the communication medium between multiple users (clients, stations), as well as improving the communication medium utilization to achieve increased bandwidth and higher quality of service in terms of delay, latency and average per-user data throughput.

WO 2017/112818 A1 discloses: A transmitter may identify a first indicator identifying a number of multi-user multiple-input/ multiple-output (MU-MIMO) stations associated with a first resource unit (RU) in a first content channel of a transmission frame. The transmitter may generate a first common portion of a WLAN signaling field in the first content channel. The first common portion may include the first indicator. The transmitter may identify a second indicator identifying an absence of MU-MIMO stations associated with a second RU in a second content channel of the transmission frame. The transmitter may generate a second common portion of the WLAN signaling field in the second content channel. The second common portion may include the second indicator. The transmitter may transmit the transmission frame including the WLAN signaling field.

XP055506060 discloses enhancements for high efficiency WLAN.

WO 2018/152224 A1 discloses: when the Bandwidth field is set to 5 or 7, the HE-SIG-B field may indicate which 20 MHz sub-channel(s) in the preamble of secondary 40 MHz channel are punctured by its RU allocation signaling; when the Band-width field is set to 6 or 7, the HE-SIG-B field may indicate which 20 MHz sub-channel(s) in the preamble of secondary 80 MHz channel are punctured by its RU allocation signaling. (See pages 306 and 307) The RU allocation signalling indicates the RU assignment in the frequency domain and includes Nx8 bits (N= for a 20 MHz and a 40 MHz HE MU PPDU, N=2 for an 80 MHz HE MU PPDU, N=4 for a 160 MHz or 80+80 MHz HE MU PPDU).

Anonymous: "P802.11ax/D3.0, Jun 2018 - IEEE Draft Standard for Information Technology - Telecommunications and Information Exchange Between Systems Local and Metropolitan Area Networks - Specific Requirements Part 11: Wireless LAN Medium Access Control (MAC) and Physical Layer (PHY) Specifications Amendment E", 1 June 2018 (2018-06-01), XP055586579, discloses MAC and PHY specifications.

### SUMMARY

The present invention is defined by the independent claims. Additional features of preferred embodiments are presented in the dependent claims.

Unless otherwise defined, all technical and/or scientific terms used herein have the same meaning as commonly understood by one of ordinary skill in the art to which the invention pertains. Although methods and materials similar or equivalent to those described herein can be used in the practice or testing of embodiments of the invention, exemplary methods and/or materials are described below. In case of conflict, the patent specification, including definitions, will control. In addition, the materials, methods, and examples are illustrative only and are not intended to be necessarily limiting.

Implementation of the method and/or system performed by a data processor of embodiments of the invention can involve performing or completing selected tasks manually, automatically, or a combination thereof. Moreover, according to actual instrumentation and equipment of embodiments of the method and/or system performed by a data processor of the invention, several selected tasks could be implemented by hardware, by software or by firmware or by a combination thereof using an operating system.

For example, hardware for performing selected tasks according to embodiments of the invention could be implemented as a chip or a circuit. As software, selected tasks according to embodiments of the invention could be implemented as a plurality of software instructions being executed by a computer using any suitable operating system. A data processor can be a computing platform for executing a plurality of instructions. Optionally, the data processor includes a volatile memory for storing instructions and/or data and/or a non-volatile storage, for example, a magnetic hard-disk and/or removable media, for storing instructions and/or data. Optionally, a network connection is provided as well. A display and/or a user input device such as a keyboard or mouse are optionally provided as well.

### BRIEF DESCRIPTION OF THE SEVERAL VIEWS OF THE DRAWINGS

Some embodiments of the invention are herein described, by way of example only, with reference to the accompanying drawings. With specific reference now to the drawings in detail, it is stressed that the particulars shown are by way of example and for purposes of illustrative discussion of embodiments of the invention. In this regard, the description taken with the drawings makes apparent to those skilled in the art how embodiments of the invention may be practiced.

In the drawings:
FIG. 1 is a flowchart of an exemplary process of transmitting a PPDU with a preamble comprising a HE-SIG field encoding active sub-channels for the PPDU transmission, according to some embodiments of the present invention;
FIG. 2 is a flowchart of an exemplary process of receiving a PPDU with a preamble comprising a HE-SIG field encoding active sub-channels for the PPDU transmission, according to some embodiments of the present invention;
FIG. 3 is a schematic illustration of an exemplary wireless environment deployed with an exemplary Access Point (AP) and exemplary stations (STA) exchanging PPDUs, according to some embodiments of the present invention;
FIG. 4 is a schematic illustration of an exemplary channel aggregation and puncturing scheme, according to some embodiments of the present invention; and
FIG. 5 is a schematic illustration of an exemplary PPDU comprising a preamble with a HE-SIG field.

### DETAILED DESCRIPTION

The present invention, in some embodiments thereof, relates to enhancing wireless transmission bandwidth and, more specifically, but not exclusively, to enhancing wireless transmission bandwidth using an increased number of channel groups each comprising multiple sub-channels for carrying the wireless transmission and encoding the active sub-channels in a High Efficiency (HE) signal field accordingly.

Wireless communication as defined by the IEEE 802.11 protocol, i.e. Wi-Fi may be done over a plurality of sub-channels (Resource Units (RU)) having a predefined bandwidth (BW), for example, 20MHz for exchanging Physical layer Protocol Data Units (PPDU) between Access Points (AP) and stations (STA) 304 in one or more frequency bands, for example, 2.4GHz and/or 5GHz.

The IEEE 802.11ac protocol and moreover the IEEE 802.11ax protocol support multi-user (MU) multiple access (multiple access) either for downlink (DL) from the AP to the STA(s) and/or for uplink (UL) from the STA(s) to the AP in order to improve utilization of the Wi-Fi wireless medium, specifically for dense environments hosting multiple stations. In the downlink direction, the AP may transmit PPDUs each encapsulating multiple Aggregated Media access control Protocol Data Unit (AMPDUs) directed for multiple STAs such that each STA receives a single AMPDU. In the uplink direction, each STA may transmit PPDUs comprising a single MPDU or AMPDU. To support the MU multiple access transmissions the AP may utilize different sub-channels for simultaneously transmitting the AMPDUs to multiple STAs.

In order to further increase the transmissions data throughput, the IEEE 802.11ax protocol defines Orthogonal Frequency Division Multiple Access (OFDMA) as the main modulation scheme, which enables the AP to assign sub-channels comprising multiple contiguous sub-carriers for transmitting and receiving AMPDUs to and from multiple STAs. Using resource units may significantly improve utilization of the wireless frequency band to increase the bandwidth for data transmission data and hence significantly increase data throughput.

The IEEE 802.11ac & 802.11ax protocols further expand the usage of the available BW by supporting channel aggregation in which the AP may utilize two channel groups (a channel segment comprising contiguous 80MHz BW is defined hereafter as a "channel group") for transmitting the PPDU to certain STAs. This transmission mode known as 160/80+80 may allow up to 160MHz bandwidth for the transmitted signal. Applying the channel aggregation may therefore further increase the bandwidth of the transmitted signal and may thus further increase the data throughput.

Due to the MU multiple access transmissions, some of the channel groups allocated by the AP for transmitting a certain AMPDU to a certain STA may include one or more sub-channels, which are currently used by a neighbor AP or STA. As such, the channel group may be punctured, meaning that some of the sub-channels of the channel group are punctured and hence not active for the transmission of the certain PPDU.

Since the aggregation and puncturing scheme may be different for the transmission of each PPDU, the channel aggregation and puncturing scheme applied for each PPDU transmission naturally needs to be reported by the AP to the respective STAs to which the PPDU is transmitted to enable the respective STAs to properly demodulate the active sub-channels used by the AP for transmitting the PPDU. The channel aggregation and puncturing scheme is relayed to the respective STA(s) through signaling resources, specifically through HE signal (HE-SIG) fields included in the preamble of each PPDU and transmitted over one or more of the active sub-channels.

The present invention presents systems and methods for enhancing the channel aggregation as defined by the IEEE 802.11ax protocol by extending to four the number of channel groups the AP may utilize for transmitting PPDUs to the STA(s). Extending the number of utilized channel groups to four may thus increases the bandwidth of the transmitted signal to up to 320MHz and hence may significantly increase the data throughput. It should be noted that the systems and methods described herein may be applied for enhancing IEEE 802.11 protocols beyond the IEEE 802.11ax protocol.

Moreover, enhancing the IEEE 802.11ax protocol is done with a minor, insignificant and potentially no increase to the transmission time by taking advantage of signaling resources, specifically the HE-SIG fields already defined by the IEEE 802.11ax protocol for indicating the channel aggregation and puncturing scheme to the STAs.

The enhanced channel aggregation is described herein the present invention with reference to the IEEE 802.11ax protocol. However, this should not be construed as limiting since the enhanced channel aggregation may apply to future IEEE 802.11 protocols beyond the IEEE 802.11ax protocol. Therefore, signaling the enhanced channel aggregation and puncturing scheme as described herein is done using the signaling resources defined by the IEEE 802.11ax protocol specifically, the HE-SIG fields. However, in case the enhanced channel aggregation is applied to enhance future IEEE 802.11 protocols, signaling the enhanced channel aggregation and puncturing scheme may be done using the signaling resources (fields) defined by such future IEEE 802.11 protocols.

The extended channel aggregation and puncturing scheme applied for the transmission of each PPDU is reported by the AP to the STA by encoding the HE-SIG fields to indicate which of the channel groups are used for transmitting the PPDU and which of the sub-channels in each used channel group are active (or punctured) for the PPDU transmission.

The AP may apply one or more encoding schemes described in detail herein after for encoding the HE-SIG, specifically a HE-SIG-A field and optionally a HE-SIG-B field to indicate the channel groups selected for the PPDU transmission and the punctured (or active) sub-channels in each of the selected channel group(s). The encoding schemes may apply to both MU transmissions where a PPDU transmitted by the AP encapsulates multiple AMPDUs directed to multiple STAs and/or to Single User (SU) transmissions in which the PPDU is transmitted by the AP to a single STA.

Most of the encoding schemes introduced by the present invention do not require the AP to increase the size of the HE-SIG transmitted in the preamble of the PPDU. Other encoding schemes introduced by the present invention may require increasing the size of the HE-SIG under certain typically infrequent conditions, for example, transmission of multiple AMPDU to multiple STAs over aggregated channel groups, a scenario that hardly occurs in reality.

Enhancing the IEEE 802.11ax protocol to support the increased bandwidth for transmitting the PPDU to improve the wireless medium utilization by extending the number of used channel groups to four may present significant advantages and benefits.

First, extending the channel aggregation to increase the number of channel groups and hence increasing the bandwidth of the signal used for transmitting the PPDU may significantly improve the wireless medium utilization resulting in a significantly increased data throughput. Extending the channel aggregation may be done without degrading the high granularity of the relatively small bandwidth sub-channels thus allowing for optimized wireless medium utilization, in particular in dense wireless environments serving many STAs. The optimized utilization is maintained since the available frequency band may be divided to the plurality of small bandwidth sub-channels which may be used for simultaneously serving the plurality of STAs.

Moreover, increasing the number of channel groups available for transmission of the PPDU is done using the existing signaling resources and fields thus imposing no significant timing alterations for signaling the extended channel aggregation and puncturing information to the STA(s). The timing parameters, for example, the latency, the delay and/or the like are therefore maintained similar to those of the IEEE 802.11ax protocol.

Furthermore, the extension to the IEEE 802.11ax protocol may be easily ported, applied and/or implemented by APs and STAs compliant and/or designed for the IEEE 802.11ax protocol since it imposes very little alterations and/or changes in the signaling resources and fields compared to the IEEE 802.11ax protocol thus allowing an easy and straight forward transition path to adopt the presented extension to the IEEE 802.11ax protocol.

Before explaining at least one embodiment of the invention in detail, it is to be understood that the invention is not necessarily limited in its application to the details of construction and the arrangement of the components and/or methods set forth in the following description and/or illustrated in the drawings and/or the Examples. The invention is capable of other embodiments or of being practiced or carried out in various ways.

The present invention may be a system, a method, and/or a computer program product. The computer program product may include a computer readable storage medium (or media) having computer readable program instructions thereon for causing a processor to carry out aspects of the present invention.

The computer readable storage medium can be a tangible device that can retain and store instructions for use by an instruction execution device. The computer readable storage medium may be, for example, but is not limited to, an electronic storage device, a magnetic storage device, an optical storage device, an electromagnetic storage device, a semiconductor storage device, or any suitable combination of the foregoing. A non-exhaustive list of more specific examples of the computer readable storage medium includes the following: a portable computer diskette, a hard disk, a random access memory (RAM), a read-only memory (ROM), an erasable programmable read-only memory (EPROM or Flash memory), a static random access memory (SRAM), a portable compact disc read-only memory (CD-ROM), a digital versatile disk (DVD), a memory stick, a floppy disk, a mechanically encoded device such as punch-cards or raised structures in a groove having instructions recorded thereon, and any suitable combination of the foregoing. A computer readable storage medium, as used herein, is not to be construed as being transitory signals per se, such as radio waves or other freely propagating electromagnetic waves, electromagnetic waves propagating through a waveguide or other transmission media (e.g., light pulses passing through a fiber-optic cable), or electrical signals transmitted through a wire.

Computer readable program instructions described herein can be downloaded to respective computing/processing devices from a computer readable storage medium or to an external computer or external storage device via a network, for example, the Internet, a local area network, a wide area network and/or a wireless network. The network may comprise copper transmission cables, optical transmission fibers, wireless transmission, routers, firewalls, switches, gateway computers and/or edge servers. A network adapter card or network interface in each computing/processing device receives computer readable program instructions from the network and forwards the computer readable program instructions for storage in a computer readable storage medium within the respective computing/processing device.

Computer readable program instructions for carrying out operations of the present invention may be assembler instructions, instruction-set-architecture (ISA) instructions, machine instructions, machine dependent instructions, microcode, firmware instructions, state-setting data, or either source code or object code written in any combination of one or more programming languages, including an object oriented programming language such as Smalltalk, C++ or the like, and conventional procedural programming languages, such as the "C" programming language or similar programming languages.

The computer readable program instructions may execute entirely on the user's computer, partly on the user's computer, as a stand-alone software package, partly on the user's computer and partly on a remote computer or entirely on the remote computer or server. In the latter scenario, the remote computer may be connected to the user's computer through any type of network, including a local area network (LAN) or a wide area network (WAN), or the connection may be made to an external computer (for example, through the Internet using an Internet Service Provider). In some embodiments, electronic circuitry including, for example, programmable logic circuitry, field-programmable gate arrays (FPGA), or programmable logic arrays (PLA) may execute the computer readable program instructions by utilizing state information of the computer readable program instructions to personalize the electronic circuitry, in order to perform aspects of the present invention.

Aspects of the present invention are described herein with reference to flowchart illustrations and/or block diagrams of methods, apparatus (systems), and computer program products according to embodiments of the invention. It will be understood that each block of the flowchart illustrations and/or block diagrams, and combinations of blocks in the flowchart illustrations and/or block diagrams, can be implemented by computer readable program instructions.

The flowchart and block diagrams in the Figures illustrate the architecture, functionality, and operation of possible implementations of systems, methods, and computer program products according to various embodiments of the present invention. In this regard, each block in the flowchart or block diagrams may represent a module, segment, or portion of instructions, which comprises one or more executable instructions for implementing the specified logical function(s). In some alternative implementations, the functions noted in the block may occur out of the order noted in the figures. For example, two blocks shown in succession may, in fact, be executed substantially concurrently, or the blocks may sometimes be executed in the reverse order, depending upon the functionality involved. It will also be noted that each block of the block diagrams and/or flowchart illustration, and combinations of blocks in the block diagrams and/or flowchart illustration, can be implemented by special purpose hardware-based systems that perform the specified functions or acts or carry out combinations of special purpose hardware and computer instructions.

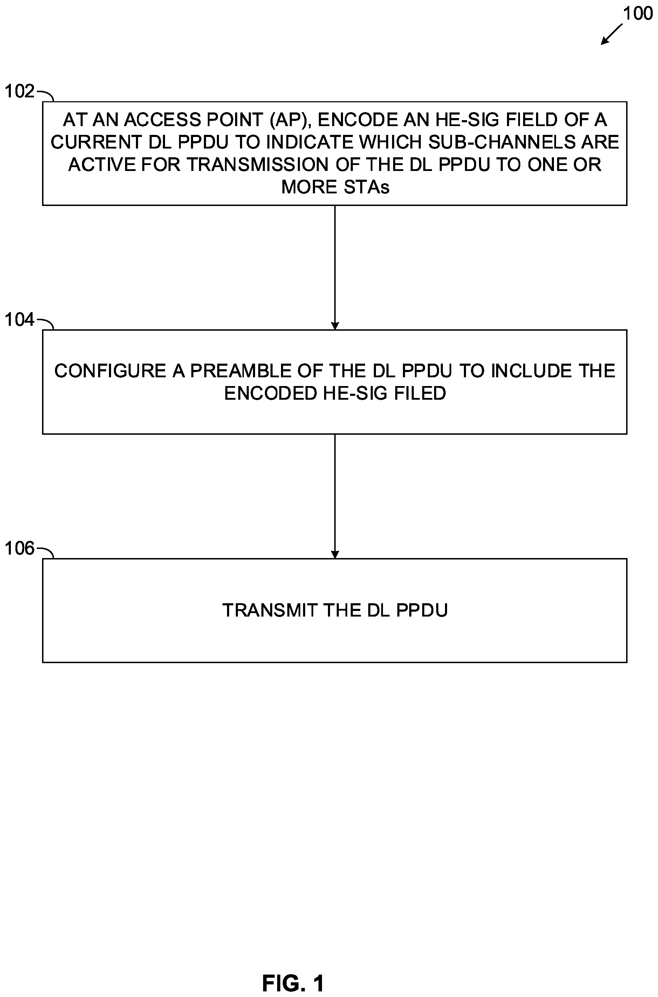

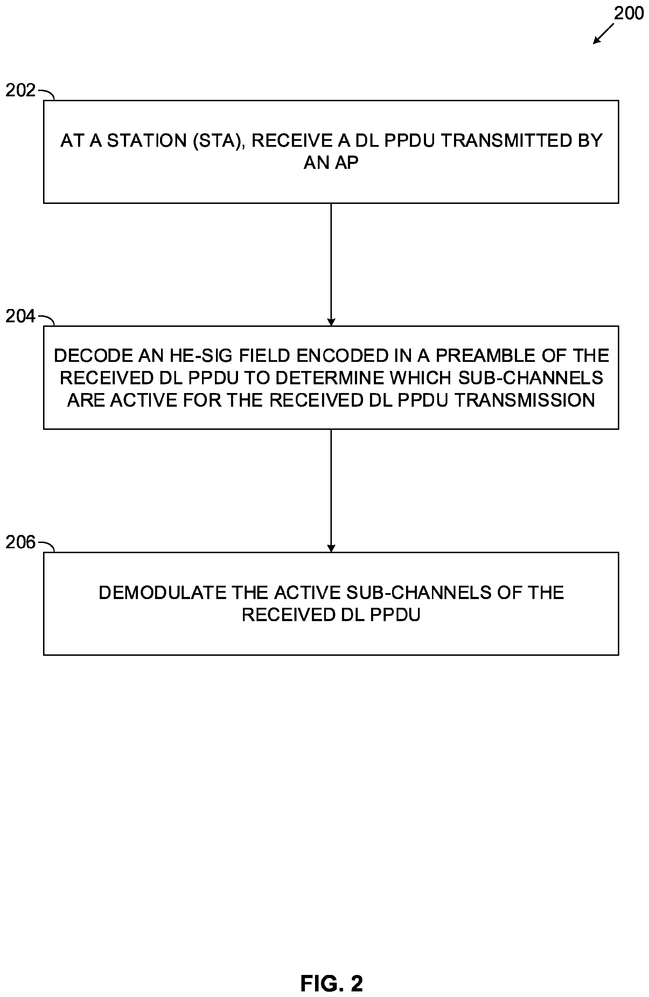

Referring now to the drawings, FIG. 1 is a flowchart of an exemplary process of transmitting a PPDU with a preamble comprising a HE-SIG field encoding active sub-channels for the PPDU transmission, according to some embodiments of the present invention. FIG. 2 is a flowchart of an exemplary process of receiving a PPDU with a preamble comprising a HE-SIG field encoding active sub-channels for the PPDU transmission, according to some embodiments of the present invention.

An exemplary process 100 may be executed by a transmitter of a wireless apparatus, in particular an Access Point (AP) transmitting a - PPDU encapsulating one or more AMPDUs to one or more stations (STAs). The AMPDUs may be transmitted over one or more channels each constructed of one or more fundamental sub-channels (RUs) - having a predefined bandwidth (BW). For example, for transmissions in the 2.4GHz and/or 5GHz frequency bands according to the IEEE 802.11 protocol (e.g. Wi-Fi), specifically, the IEEE 802.11ax protocol, the IEEE 802.11ac protocol and/or the like, the bandwidth of each sub-channel may be, for example, 20MHz.

An exemplary process 200 may be executed by one or more wireless receivers, in particular receivers of one or more STAs receiving a PPDU from the AP.

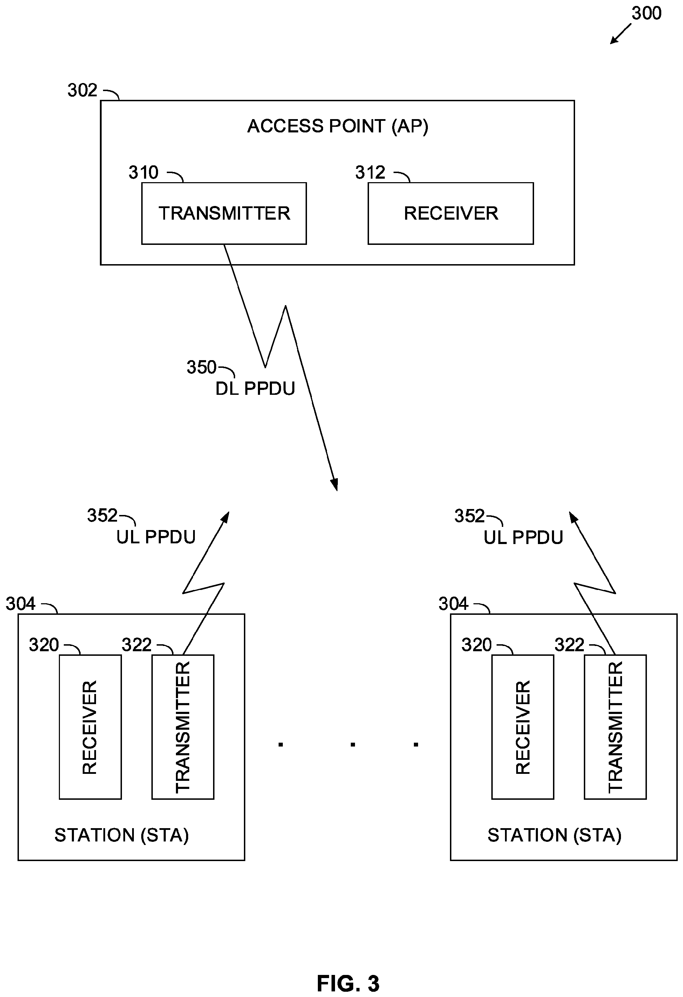

Reference is also made to FIG. 3, which is a schematic illustration of an exemplary wireless environment deployed with an exemplary Access Point (AP) and exemplary stations (STA) exchanging PPDUs, according to some embodiments of the present invention. An exemplary wireless environment 300 deployed to operate according to the IEEE 802.11 protocol, specifically enhancing the IEEE 802.11ax protocol, may typically include one or more APs 302 and one or more STAs 304.

The AP 302 comprises a wireless transmitter 310, specifically a wireless transmitter adapted to operate according to an enhanced IEEE 802.11ax protocol which is compliant and enhances the IEEE 802.11ax protocol for transmitting a DL PPDU 350 encapsulating one or more AMPDUs to one or more of the STAs 304 over one or more frequency bands, specifically 2.4GHz and/or 5GHz. The AP 302 may further include a receiver 312 for receiving one or more UL PPDU(s) 352 from one or more of the STAs 304. Each UL PPDU 352 received from the STA(s) 304 typically comprises a single AMPDU.

Each STA 304 comprises a wireless receiver 320, specifically a wireless receiver adapted to operate according to the enhanced IEEE 802.11ax protocol for receiving the DL PPDU 350 transmitted by the transmitter 310 of the AP 302. The STA(s) 304 may further include a wireless transmitter 322, specifically a wireless transmitter adapted to operate according to the IEEE 802.11 protocol for transmitting the UL PPDU 352 to the receiver 312 of the AP 302.

The transmitter 310, the receiver 312, the transmitter 322 and/or the receiver 320 may be implemented, utilized and/or facilitated by one or more circuitries, for example, a circuit, a component, an Integrated Circuit (IC), an Application Specific Integrated Circuit (ASIC), a Field Programmable Gate Array (FPGA), a Digital Signals Processor (DSP) and/or the like. Moreover, the transmitter 310, the receiver 312, the transmitter 322 and/or the receiver 320 may be implemented, utilized and/or facilitated by one or more processors executing one or more software modules, for example, a process, a script, an application, an agent, a utility, a tool and/or the like each comprising a plurality of program instructions stored in a non-transitory medium and executed by one or more processors. The transmitter 310, the receiver 312, the transmitter 322 and/or the receiver 320 may further be implemented, utilized and/or facilitated by a combination of one or more circuitries and one or more software modules executed by one or more processors.

For example, the AP 320 may include a MAC (Media Access Controller) and a PHY (Physical Layer) to utilize the transmitter 310 and/or the receiver 312. Similarly, the STA(s) 304 may include a MAC and a PHY to utilize the receiver 320 and/or the transmitter 32.

The IEEE 802.11 protocol defines a channel having a predefined bandwidth, for example, 20MHz, 40MHZ, 80MHz and/or 160MHz for transmitting the DL PPDU 350 from the AP 320 to one of the STAs 304 in one or more frequency bands, for example, 2.4GHz and/or 5GHz. Advanced variants of the IEEE 802.11, for example, the IEEE 802.11ax and beyond support multi-user (MU) access (multiple access). The MU access may support MU downlink in which the AP 302 may transmit the DL PPDU 350 (encapsulating one or more AMPDUs) utilizing different sub-channels for simultaneously transmitting the multiple encapsulated AMPDUs to multiple respective STAs 304. The MU access may further support MU uplink in which the AP 302 may simultaneously receive multiple UL PPDUs 352 (each comprising a single AMPDU) from multiple STAs 304 transmitting their respective UL PPDUs 352 on different sub-channels.

In order to increase throughput of data transmission, the IEEE 802.11ax protocol introduces a High Efficiency (HE) mode in which multiple sub-channels (RUs) may be used by the transmitter 310 of the AP 302 for (downlink) transmitting the PPDU 350 to the receiver 320 of one or more STAs 304. The HE mode defined by the IEEE 802.11ax protocol further expands the usage of the channel groups by supporting channel aggregation in which the AP 302 may utilize two channel groups for transmitting the PPDU 350 to one or more of the STAs 304. Applying the channel groups and moreover the channel aggregation for transmitting the PPDU 350 may therefore significantly increase data throughput.

While supporting the aggregated channel groups, the IEEE 820.11ax protocol maintains the 20MHz bandwidth for each sub-channel to maintain high puncturing granularity of the sub-channels allocation for the MU multiple access transmissions. Therefore, since according to the IEEE 820.11ax protocol each channel group may include up to four sub-channels each having a 20MHz bandwidth, each channel group may have a bandwidth of 80MHz.

Applying the channel aggregation according to the IEEE 820.11ax protocol is known as 160/80+80 HE mode in which two channel groups may be used for transmitting the PPDU 350 thus resulting in a 160MHz transmission bandwidth.

The MU multiple access operation may affect the channel groups and the channel aggregation since different sub-channels of the same channel group(s) may be allocated for different AMPDUs within the DL PPDU 350 transmitted from the AP 302 to different STAs 304. As such one or more channel groups allocated for downlink transmission to one or more STAs 304 may need to be punctured, meaning that only a subset of the sub-channels of the channel group is active for the transmitted PPDU350.

On the other end, each STA 304 needs to identify which of the sub-channels is active (not punctured) for the transmission of the PPDU 350 transmitted from the AP 302 to the respective STA 304.

The channel aggregation and puncturing scheme is indicated (signaled) for each PPDU 350 by encoding one or more fields (signaling resources) in a preamble of the PPDU 350 as defined by the IEEE 802.11ax protocol thus allowing each receiver 320 to identify the sub-channels which are active for the PPDU350 directed to this receiver 320.

In addition to the STA(s) 304 supporting the enhanced IEEE 802.11ax protocol and hence supporting the IEEE 802.11ax protocol, the wireless environment 300 may include one or more legacy STAs which do not support the HE mode of the IEEE 802.11ax protocol. In order to support backward compatibility with the legacy STAs and allow coexistence of the IEEE 802.11ax compliant STA(s) 304 with the legacy STA(s), the channel groups defined by the IEEE 802.11ax protocol include a primary channel group and one or more secondary channel groups. The primary channel group includes the primary sub-channel which is the common sub-channel used by all STAs compliant with the IEEE 802.11 protocol including the legacy STAs. The primary channel group further includes three secondary (non-primary) sub-channels and each of the secondary channel groups includes four secondary sub-channels.

Therefore in order to support the legacy STA(s), during transmission according to the HE modes defined by the IEEE 802.11ax protocol, the preamble of the DL PPDUs 350 is transmitted over the primary sub-channel and optionally over one or more of the active sub-channels such that the legacy STA(s) may be aware of the transmitted DL PPDU 350.

As such, the transmitter 310 applying the channel aggregation defined by the IEEE 802.11ax protocol may use the primary channel group and one of the secondary channel groups for the 160/80+80 HE transmission mode.

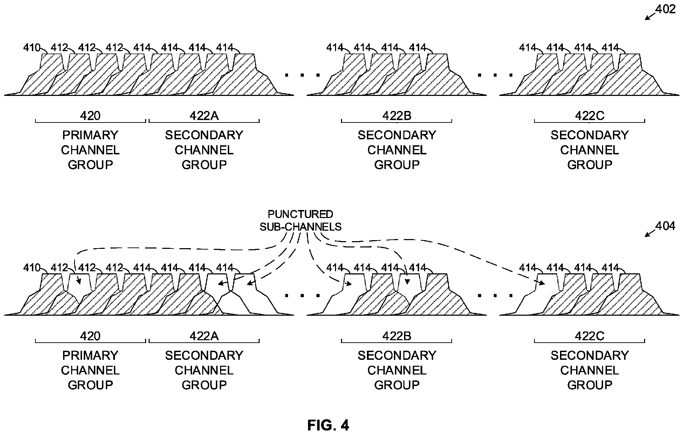

Reference is now made to FIG. 4, which is a schematic illustration of an exemplary channel aggregation and puncturing scheme, according to some embodiments of the present invention. An exemplary frequency spectrum 402 as defined by the IEEE 802.11ax protocol presents a primary channel group 420 and one or more secondary channel groups 422, for example, 422A, 422B and 422C. The primary channel group 420 includes a primary sub-channel (RU) 410 and three secondary (non-primary) sub-channels 412. Each of the secondary channel groups 422 includes four secondary sub-channels 414.

An exemplary frequency spectrum 404 presents active channels used by a transmitter such as the transmitter 310 of an AP such as the AP 302 for transmitting a DL PPDU such as the DL PPDU 350 to an STA such as the STA 304. As seen, one or more of the secondary sub-channels 412 of the primary channel group 420 and/or one or more of the secondary sub-channels 414 of the secondary channel group(s) 422 may be punctured, i.e. not active (not used) for the currently transmitted DL PPDU 350. For example, the first sub-channel 412 of the primary channel group 420 is not active and is therefore indicated as punctured. In another example, the last two sub-channels 414 of the secondary channel group 422A are not active and are therefore indicated as punctured. In another example, the first and third sub-channels 414 of the secondary channel group 422B are not active and are therefore indicated as punctured. In another example, the first sub-channel 414 of the secondary channel group 422C is not active and is therefore indicated as punctured.

The channel aggregation and puncturing scheme of each DL PPDU 350 is indicated in the preamble of the DL PPDU 350 as defined by the IEEE 802.11ax protocol.

The preamble of each DL PPDU 350 defined by the IEEE 802.11 protocol includes one or more legacy signal fields used by the legacy STA(s) and further includes additional HE signal fields to support signaling for the HE transmission mode(s). While the legacy STA(s) may use the legacy signal fields, such legacy STA(s) may be oblivious to the HE signal fields that may be used by the STA(s) 304 supporting the IEEE 802.11ax protocol.

Some of the HE signal fields of each DL PPDU 350 may be common such that they may be decoded by each receiver 320 of each of the STA(s) 304 which receives the DL PPDU 350 while other HE signal fields may be private and used only by the receiver 320 for which the AMPDU(s) encapsulated in the DL PPDU 350 is directed.

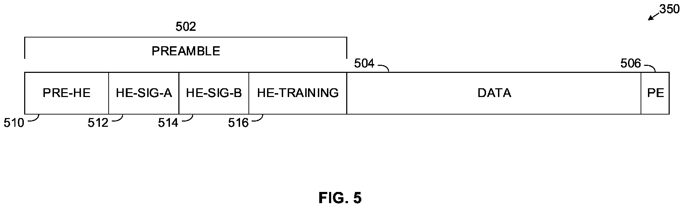

Reference is now made to FIG. 5, which is a schematic illustration of an exemplary PPDU comprising a preamble with a HE-SIG field. An exemplary DL PPDU such as the DL PPDU 350 transmitted by a transmitter such as the transmitter 310 of an AP such as the AP 302 may include a preamble 502, a data payload 504 and optionally a packet extension (PE) 506.

The preamble 502 may include a PRE-HE 510 comprising one or more legacy signal fields, for example, a legacy short training field (L-STF), a legacy long training field (L-LTF), a legacy signal filed (L-SIG), legacy signal filed repetition (RL-SIG) and/or the like.

The preamble 502 defined by the IEEE 802.11ax protocol, may further include one or more HE signal fields, for example, a HE signal field A (HE-SIG-A) 512, a HE signal field B (HE-SIG-B) 514, a HE training field (HE-TRAINING) 516 and/or the like. The HE-TRAINING) 516 may include one or more training fields such as, for example, a short training field, a long training field and/or the like. Moreover, the preamble 502 may include one or more repetitions of one or more of the HE signal fields.

The HE-SIG-A 512 may be a common filed which may be decoded, interpreted and/or used by any receiver such as the receiver 320 which receives the DL PPDU 350, i.e. any receiver 320 which is in range of the transmitter 310. The HE-SIG-B 412 may include a common part decoded, interpreted and/or used by any receiver 320 which receives the DL PPDU 350 and private parts that defines the STA(s) 304 for which the AMPDU(s) encapsulated in the DL PPDU 350 is intended.

According to some embodiments of the present invention, the IEEE 802.11ax protocol is enhanced to support higher bandwidth transmissions of the DL PPDU 350 of up to 320MHz. This is done by supporting channel aggregation of up to four channel groups, i.e. the primary channel group having a maximum bandwidth of 80MHz and up to three of the secondary channel groups each having a maximum bandwidth of 80MHz for a maximum total bandwidth of up to 320MHz.

Moreover, the channel aggregation and puncturing scheme according to the enhanced IEEE 802.11ax protocol is done by utilizing one or more existing HE signal fields of the preamble 502 of the PPDU 350 to avoid adding additional fields which may increase the size of the transmitted data, specifically to avoid additional fields in the preamble 502 compared to the IEEE 802.11ax protocol.

Similarly to the IEEE 802.11ax protocol, according to the enhanced IEEE 802.11ax protocol described herein, the primary channel group such as the primary channel group 420 is always used for transmitting the DL PPDU 350.

Also, similarly to the IEEE 802.11ax protocol, according to the enhanced IEEE 802.11ax protocol described herein, one or more of the secondary channel groups 422 (e.g. 422A, 422B and/or 422C) used for transmitting a certain PPDU 350 may be punctured, i.e. not all sub-channels such as the sub-channels 414 of the secondary channel group(s) 422 are active for the certain PPDU 350 transmission.

Finally with respect to the primary channel group 420, similarly to the IEEE 802.11ax protocol, according to the enhanced IEEE 802.11ax protocol described herein, while the primary sub-channel such as the primary sub-channel 410 is always used, the transmitter 310 may apply channel puncturing to the primary channel group 420 for using one or more of the secondary sub-channels such as the secondary sub-channels 412 of the primary channel group 420.

The main improvement in the enhanced IEEE 802.11ax protocol compared to the IEEE 802.11ax protocol is therefore increasing the transmission bandwidth by supporting extended channel aggregation such that the transmitter 310 may use up to three of the secondary channel groups such as the secondary channel groups 422A, 422B and/or 422C for transmitting the PPDU 350.

Reference is made once again to FIG. 1.

As shown at 102, the process 100 starts with the transmitter 310 of the AP 302 encoding the channel aggregation and puncturing scheme information for a current DL PPDU 350 to be transmitted to one or more of the STAs 304.

The transmitter 310 may apply one or more of a plurality of encoding schemes to encode the channel aggregation and puncturing information, specifically the transmitter 310 may use the common parts of the HE-SIG-A 512 and/or the HE-SIG-B 514 for encoding the channel aggregation and puncturing information of the currently transmitted DL PPDU 350.

As described herein before, according to the enhanced IEEE 802.11ax protocol, the primary sub-channel 410 of the primary channel group 420 is active for the transmission of the DL PPDU 350. In addition, one or more of the secondary sub-channels 412 of the primary channel group 420 and one or more of the secondary sub-channels 414 of one or more of the secondary channel group 422 may also be active for transmission of the DL PPDU 350.

In a first encoding scheme example, the transmitter 310 may encode three aggregation bits in the common part of the HE-SIG-A 512 to indicate which of the secondary channel groups 422, for example, 422A, 422B and/or 422C includes active sub-channel(s) 414 for transmission of the current PPDU 350. For example, each aggregation bit may correspond to a respective one of the three secondary channel groups 422A, 422B and/or 422C. Setting an aggregation bit to "1" indicates the respective secondary channel groups 422 comprises active sub-channels while resetting the aggregation bit to "0" indicates the respective secondary channel groups 422 does not comprise active sub-channels.

The transmitter 310 may further encode three primary puncturing bits in the common part of the HE-SIG-A 512 to indicate which of the secondary sub-channels 412 of the primary channel group 420 is active for the DL PPDU 350 transmission. For example, each primary puncturing bit may correspond to a respective one of the three secondary sub-channels 412. Setting a primary puncturing bit to "1" indicates the respective secondary sub-channel groups 412 is active while resetting the primary puncturing bit to "0" indicates the respective secondary sub-channel groups 412 is not active.

Encoding the aggregation bits and for the primary puncturing bits may be done by the transmitter 310 using bits defined in the HE-SIG-A 512 by the IEEE 802.11ax protocol.

The transmitter 310 further encodes four secondary puncturing bits for each of the secondary channel groups 422 indicated by the aggregation bits to indicate which of the secondary sub-channels 414 of the respective secondary channel group 422 is active. The transmitter 310 may therefore encode four secondary puncturing bits in case a single secondary channel group 422 is indicated by the aggregation bits, 8 secondary puncturing bits in case two secondary channel groups 422 is indicated by the aggregation bits and 12 secondary puncturing bits in case three secondary channel groups 422 is indicated by the aggregation bits. For example, each secondary puncturing bit may correspond to a respective one of the three secondary sub-channels 414 of the respective secondary channel group 422. Setting a secondary puncturing bit to "1" indicates the respective secondary sub-channel groups 414 is active while resetting the secondary puncturing bit to "0" indicates the respective secondary sub-channel groups 414 is not active.

In a first variant of the first encoding scheme, the transmitter 310 may encode the secondary puncturing for the secondary channel group(s) 422 indicated by the aggregation bits using bits reserved in the HE-SIG-A 512 for one or more other parameters of the DL PPDU 350 according to the IEEE 802.11ax protocol. The reserved bits may be reserved for defined parameter and/or reserved for future use. For example, the transmitter 310 may use bits reserved by the IEEE 802.11ax protocol for spatial reuse functionality.

In a second variant of the first encoding scheme, the transmitter 310 encodes the secondary puncturing bits for the secondary channel group(s) 422 indicated by the aggregation bits by adding (e.g. appending) one or more additional bit fields to the HE-SIG-A 512. For example, the transmitter 310 may append a single four-bit field to the HE-SIG-A 512 in case a single secondary channel group 422 is indicated by the aggregation bits. In another example, the transmitter 310 may append two four-bit fields to the HE-SIG-A 512 in case two secondary channel groups 422 are indicated by the aggregation bits where each of the two four-bit fields corresponds to one of the two indicated secondary channel groups 422. In another example, the transmitter 310 may append three four-bit fields to the HE-SIG-A 512 in case all three secondary channel groups 422 are indicated by the aggregation bits where each of the three four-bit fields corresponds to one of the three secondary channel groups 422.

Table 1 below describes an exemplary encoding scheme for the aggregation bits and the corresponding maximum bandwidth available for the transmission.

**Table 1:**

| Aggregation bits | Secondary sub-channels 412 comprising active sub-channels 414 | Bandwidth |
|---|---|---|
| 000 | None | Up to 80MHz |
| 001 | 422C | Up to 160MHz |
| 010 | 422B | Up to 160MHz |
| 100 | 422A | Up to 160MHz |
| 011 | 422C and 422B | Up to 240MHz |
| 101 | 422C and 422A | Up to 240MHz |
| 110 | 422B and 422A | Up to 240MHz |
| 111 | 422A and 422B and 422C | Up to 320MHz |

Table 2 below describes an exemplary encoding scheme for the primary puncturing bits and the corresponding maximum bandwidth available by the primary channel group 420 for the transmission.

**Table 2:**

| Primary puncturing bits | Active secondary sub-channels 412 | Bandwidth |
|---|---|---|
| 000 | None | 20MHz |
| 001 | One | 40MHz |
| 010 | One | 40MHz |
| 100 | One | 40MHz |
| 111 | Three | 80MHz |

Table 3 below describes an exemplary encoding scheme for the secondary puncturing bits for each of the secondary channel groups 422 and the corresponding maximum bandwidth available by the respective secondary channel groups 422 for the transmission.

**Table 3:**

| Secondary Puncturing bits | Active secondary sub-channels 414 | Bandwidth |
|---|---|---|
| 0000 | One | 20MHz |
| 0010 | | |
| 0100 | | |
| 1000 | | |
| 0011 | Two | 40MHz |
| 0101 | | |
| 1001 | | |
| 1010 | | |
| 1100 | | |
| 0111 | Three | 60MHz |
| 1011 | | |
| 1110 | | |
| 1111 | Four | 80MHz |

The overall bandwidth available for the transmission is a sum of the overall number of sub-channels, specifically the primary sub-channel 410, the secondary sub-channel(s) 412 and the secondary sub-channel(s) 414 indicated by the encoded bit fields in the HE-SIG-A 512, specifically the aggregation bits, the primary puncturing bits and the secondary puncturing bits of each of the secondary channel groups indicated by the aggregation bits.

In a second encoding scheme example, two channel aggregation options are valid, either the primary channel group 420 and a single one of the three secondary channel groups 422 include active sub-channel(s) 414 for the DL PPDU 350 transmission or the primary channel group 420 and all three secondary channel groups 422 include active sub-channels 414 for the DL PPDU 350 transmission. Moreover, in case all three secondary channel groups 422 include active sub-channels 414 for the DL PPDU 350 transmission, all the sub-channels 414 of all the three secondary channel groups 422 are active for transmission of the DL PPDU 350, i.e. none of the three secondary channel groups 422 is punctured.

According to the second encoding scheme, the transmitter 310 may encode two aggregation bits in the HE-SIG-A 512 to indicate which of the three secondary channel groups 422 includes active sub-channels 414 for the DL PPDU 350 transmission or whether all three secondary channel groups 422 are used for the DL PPDU 350 transmission.

Table 4 below describes an exemplary encoding scheme for the aggregation bits and the corresponding maximum bandwidth available for the transmission.

**Table 4:**

| Aggregation bits | Secondary sub-channels 412 comprising active sub-channels 414 | Bandwidth |
|---|---|---|
| 00 | 422A | Up to 160MHz |
| 01 | 422B | Up to 160MHz |
| 01 | 422C | Up to 160MHz |
| 11 | 422A, 422B and 422C | 320MHz |

In case a single one of the secondary channel group 422 comprises active sub-channels, the transmitter 310 may further encode seven puncturing bits in the HE-SIG-A 512 to indicate which of the three secondary sub-channels 412 of the primary channel group 420 and which of the four secondary sub-channels 414 of the indicated secondary channel group 422 are active for the DL PPDU 350 transmission. Each of the seven puncturing bits corresponds to one of the secondary sub-channels 412 or one of the secondary sub-channels 414.

In case all three secondary channel groups 422 include active sub-channels 414 for the DL PPDU 350 transmission none of the three secondary channel groups 422 is punctured and the seven puncturing bits may be discarded, i.e. not used.

In a third encoding scheme example, the granularity of the secondary channel groups 422 is set to four contiguous sub-channels 414 (i.e. 80MHz). This means in case a certain secondary channel group 422 comprises active channels for transmission of the DL PPDU 350, all the secondary sub-channels 414 of the certain secondary channel group 422 are active.

According to the third encoding scheme, the transmitter 310 may encode three aggregation bits in the HE-SIG-A 512 to indicate which of the three secondary channel groups 422 includes active sub-channels 414 for the DL PPDU 350 transmission where all of the sub-channels 414 of the indicated secondary channel group(s) 422 are active.

To encode the puncturing of the primary channel group 420 for indicating the active secondary sub-channels 412 the transmitter 310 may encode the puncturing of the primary channel group 420, using the same bits in the HE-SIG-A 512 used for indicating the puncturing of the primary channel group 420 as defined by the IEEE 802.11ax protocol.

Table 5 below describes an exemplary encoding scheme for the aggregation bits and the corresponding maximum bandwidth available for the transmission.

**Table 5:**

| Aggregation bits | Secondary sub-channels 412 comprising active sub-channels 414 | Bandwidth |
|---|---|---|
| 0000-0111 | Defined in the IEEE 802.11ax protocol | Up to 160MHz |
| 1000 | Reserved | |
| 1001 | 422C | Up to 160MHz |
| 1010 | 422B | Up to 160MHz |
| 1011 | 422B and 422C | Up to 240MHz |
| 1100 | Reserved | |
| 1101 | 422A and 422C | Up to 240MHz |
| 1110 | 422A and 422B | Up to 240MHz |
| 1111 | 422A, 422B and 422C | Up to 320MHz |

In a fourth encoding scheme example, the transmitter 310 may encode three aggregation bits in the common part of the HE-SIG-A 512 as described herein before for the forth encoding scheme to indicate which of the secondary channel groups 422, for example, 422A, 422B and/or 422C includes active sub-channel(s) 414 for transmission of the current DL PPDU 350. The transmitter 310 may further encode three primary puncturing bits in the common part of the HE-SIG-A 512 to indicate which of the secondary sub-channels 412 of the primary channel group 420 is active for the DL PPDU 350 transmission.

Table 6 below describes an exemplary encoding scheme for the aggregation bits and the corresponding HE transmission mode.

**Table 6:**

| Aggregation bits | HE transmission mode |
|---|---|
| 0000-0111 | Defined in the IEEE 802.11ax protocol |
| 1000 | 240MHz |
| 1001 | Primary sub-channel 410 and secondary sub-channel 412 are active and 240MHz |
| 1010 | Primary sub-channel 410 and all secondary sub-channel 412 are active and 240MHz |
| 1011 | 320MHz |
| 1100 | Primary sub-channel 410 and secondary sub-channel 412 are active and 320MHz |
| 1101 | Primary sub-channel 410 and all secondary sub-channel 412 are active and 320MHz |
| 1110-1111 | Reserved |

The transmitter 310 may use the common part of the HE-SIG-B 514 for encoding the puncturing information for the secondary channel group(s) 422 indicated in by the aggregation bits in the HE-SIG-A 512, i.e. for indicating which of the secondary sub-channels 414 of the indicated secondary channel group(s) 422 is active for the transmission of the current DL PPDU 350.

According to a first variant of the fourth encoding scheme, the transmitter 310 may indicate non-active (punctured) sub-channels 414 of the secondary channel groups 422 indicated in the aggregation bits by encoding a "242-tone RU empty" bitmap in a Resource Unit (RU) allocation subfield in the common part of the HE-SIG-B 514 as defined nu the IEEE 802.11ax. The transmitter 310 may transmit the RU allocation subfield in the preamble 502 over each punctured sub-channel 514 to indicate that the respective punctured sub-channel 514 is a non-active for the transmission of the DL PPDU 350.

The receiver 320 of the STA 304 to which the DL PPDU 350 is transmitted needs to first decode the HE-SIG-A 512 to extract the aggregation information and identify the channel aggregation (i.e. the secondary channels 422 comprising active sub-channels 414) and the primary puncturing information (i.e. the active sub-channels 412 of the primary channel group 420). The receiver 320 may then decode the HE-SIG-B 514 of each of the sub-channels 414 of the secondary channel group 422 indicated by the aggregation bits to identify the punctured (and hence the active) sub-channels 414 indicated by the "242-tone RU empty" bitmap.

According to a second variant of the fourth encoding scheme, the transmitter 310 may indicate non-active (punctured) sub-channels 414 of the secondary channel groups 422 indicated in the aggregation bits by encoding a predefined value, for example, 2046 in a user field AID12 of the HE-SIG-B 514.

Similarly to the first variant of the fourth encoding scheme, the receiver 320 of the STA 304 to which the PPDU 350 is transmitted needs to first decode the HE-SIG-A 512 to extract the aggregation information and identify the channel aggregation and the primary puncturing information. The receiver 320 may then decode the HE-SIG-B 514 of each of the sub-channels 414 of the secondary channel group 422 indicated by the aggregation bits to identify the punctured (and hence the active) sub-channels 414 indicated by the predefined value in the AID12 user field.

In a fifth encoding scheme example, the DL PPDU 350 is directed to a Single User (SU) such that the primary sub-channel 410 and all secondary sub-channels 412 and 414 may be used for transmitting the DL PPDU 350 to a certain one of the STAs 304. Moreover, the granularity of the primary channel group 420 and the secondary channel groups 422 is set to four contiguous sub-channels 414 (i.e. 80MHz). This means in case a certain secondary channel group 422 comprises active channels for transmission of the DL PPDU 350, the certain secondary channel group 422 is not punctured, i.e. all the secondary sub-channels 414 of the certain secondary channel group 422 are active for transmission of the DL PPDU 350.

According to a first variant of the fifth encoding scheme, the transmitter 310 may encode three aggregation bits in the HE-SIG-A 512 to indicate which of the three secondary channel groups 422 includes active sub-channels 414 for the DL PPDU 350 transmission where all of the sub-channels 414 of the indicated secondary channel group(s) 422 are active.

Table 7 below describes an exemplary encoding scheme for the aggregation bits and the corresponding maximum bandwidth available for the transmission.

**Table 7:**

| Aggregation bits | Secondary sub-channels 412 comprising active sub-channels 414 | Bandwidth |
|---|---|---|
| 0001 | 422C | 160MHz |
| 0010 | 422B | 160MHz |
| 0011 | 422B and 422C | 240MHz |
| 0100 | 422A | 160MHz |
| 0101 | 422A and 422C | 240MHz |
| 0110 | 422A and 422B | 240MHz |
| 0111 | 422A and 422B and 422C | 320MHz |
| 1000-1010 | Defined in the IEEE 802.11ax protocol | Up to 160MHz |
| 1011-1111 | Reserved | |

According to a second variant of the fifth encoding scheme, the DL PPDU 350 may be transmitted to the SU STA 304 using the primary channel group 420 and a single one of the three secondary channel groups 422 or the primary channel group 420 and all three secondary channel groups 422. The transmitter 310 may encode two aggregation bits in the HE-SIG-A 512 to indicate which of the three secondary channel groups 422 includes active sub-channels 414 for the DL PPDU 350 transmission or whether all three secondary channel groups 422 includes active sub-channels 414 for the DL PPDU 350 transmission. None of the indicated secondary channel group(s) 422 is punctured meaning that all the sub-channels 414 of the indicated secondary channel group(s) 422 are active.

Table 8 below describes an exemplary encoding scheme for the aggregation bits and the corresponding maximum bandwidth available for the transmission.

**Table 8:**

| Aggregation bits | Secondary sub-channels 412 comprising active sub-channels 414 | Bandwidth |
|---|---|---|
| 000-010 | None | 20MHz, 40MHz, 80MHz |
| 011 | 422A and 422B and 422C | 320MHz |
| 010 | 422A | 160MHz |
| 100 | 422B | 160MHz |
| 110 | 422C | 160MHz |
| 111 | Reserved | |

According to a third variant of the fifth encoding scheme, the DL PPDU 350 may be transmitted to the SU STA 304 using the primary channel group 420 and two of the three secondary channel groups 422 or the primary channel group 420 and all three secondary channel groups 422. The transmitter 310 may encode two aggregation bits in the HE-SIG-A 512 to indicate which two of the three secondary channel groups 422 includes active sub-channels 414 for the DL PPDU 350 transmission or whether all three secondary channel groups 422 includes active sub-channels 414 for the DL PPDU 350 transmission. None of the indicated secondary channel groups 422 is punctured meaning that all the sub-channels 414 of the indicated secondary channel groups 422 are active.

Table 9 below describes an exemplary encoding scheme for the aggregation bits and the corresponding maximum bandwidth available for the transmission.

**Table 9:**

| Aggregation bits | Secondary sub-channels 412 comprising active sub-channels 414 | Bandwidth |
|---|---|---|
| 000-011 | 422A or 422B or 422C | 20MHz, 40MHz, 80MHz, 160(80+80)MHz |
| 100 | 422A and 422B and 422C | 320MHz |
| 101 | 422A and 422B | 240MHz |
| 110 | 422A and 422C | 240MHz |
| 111 | 422B and 422C | 240MHz |

As shown at 104, the transmitter 310 transmits the HE-SIG-A 512 and optionally the HE-SIG-B 514 encoded with the channel aggregation and puncturing information in the preamble 502 of the current DL PPDU 350. The transmitter 310 transmits the encoded HE-SIG-A 512 and optionally the HE-SIG-B 514 in the preamble 502 transmitted over the primary sub-channel 410.The transmitter 310 may transmit the encoded HE-SIG-A 512 and optionally the HE-SIG-B 514 in the preamble 502 transmitted over each of the active sub-channel 410, 412 and/or 414 in case they are not punctured.

Reference is made once again to FIG. 2.

As shown at 202, the process 100 starts with the receiver 320 of one of the STA 304 receiving a currently transmitted DL PPDU 350 encapsulating one or more AMPDUs transmitted over one or more of the plurality of sub-channels.

As shown at 204, the receiver 320 decodes the HE-SIG-A 512 and optionally the HE-SIG-B 514 of the preamble of the received DL PPDU 350 to extract the channel aggregation and puncturing information and determine the channel aggregation and puncturing scheme for the transmission of the received PPDU 350.

Naturally the receiver 320 is adapted, configured and/or designed to follow the design and operation of the transmitter 310. The receiver 320 may therefore apply appropriate decoding according to the encoding scheme(s) applied by the transmitter 310 to encode the channel aggregation and puncturing information in the HE-SIG-A 512 and optionally the HE-SIG-B 514 in the preamble 502 of the received DL PPDU 350.

As shown at 206, the receiver may demodulate the active sub-channel(s) 410, 412 and/or 414 as indicated by the channel aggregation and puncturing information extracted from the HE-SIG-A 512 and optionally the HE-SIG-B 514.

The receiver may further recover data included in the data payload 504 of the received DL PPDU 350.

It is expected that during the life of a patent maturing from this application many relevant systems, methods and computer programs will be developed and the scope of the terms channel bandwidth and IEEE 802.11 signaling resources are intended to include all such new technologies a priori.

As used herein the term "about" refers to ± 10 %.

The terms "comprises", "comprising", "includes", "including", "having" and their conjugates mean "including but not limited to".

The term "consisting of" means "including and limited to".

As used herein, the singular form "a", "an" and "the" include plural references unless the context clearly dictates otherwise. For example, the term "a compound" or "at least one compound" may include a plurality of compounds, including mixtures thereof.

Throughout this application, various embodiments of this invention may be presented in a range format. It should be understood that the description in range format is merely for convenience and brevity and should not be construed as an inflexible limitation on the scope of the invention. Accordingly, the description of a range should be considered to have specifically disclosed all the possible subranges as well as individual numerical values within that range. For example, description of a range such as from 1 to 6 should be considered to have specifically disclosed subranges such as from 1 to 3, from 1 to 4, from 1 to 5, from 2 to 4, from 2 to 6, from 3 to 6 etc., as well as individual numbers within that range, for example, 1, 2, 3, 4, 5, and 6. This applies regardless of the breadth of the range.

Whenever a numerical range is indicated herein, it is meant to include any cited numeral (fractional or integral) within the indicated range. The phrases "ranging/ranges between" a first indicate number and a second indicate number and "ranging/ranges from" a first indicate number "to" a second indicate number are used herein interchangeably and are meant to include the first and second indicated numbers and all the fractional and integral numerals therebetween.

## Claims

1. A data processor for executing a plurality of instructions to perform the following operation:
encoding (102) a signaling field to indicate which of a plurality of sub-channels is punctured for transmission of a downlink physical layer protocol data unit, DL PPDU, wherein the plurality of sub-channels are arranged in a primary channel group and three secondary channel groups, the primary channel group comprises a primary sub-channel and three secondary sub-channels, each of the three secondary channel groups comprises four secondary sub-channels, wherein the signaling field comprises four secondary puncturing bits for each of the secondary channel groups indicate which of the secondary sub-channels of the respective secondary channel group is punctured;
configuring (104) a preamble of the DL PPDU, wherein the preamble includes the encoded signaling field;
transmitting (106) the DL PPDU.

2. The data processor according to claim 1, the primary channel group having an 80MHz bandwidth, BW, and each of the secondary channel groups having an 80MHz BW.

3. The data processor according to claim 1 or 2, wherein each of the plurality of sub-channels having a 20MHz BW.

4. The data processor according to any one of claims 1 to 3, wherein the data processor comprises a memory for storing the instructions.

5. A data processor for executing a plurality of instructions to perform the following operation:
receiving (202) a downlink physical layer protocol data unit, DL PPDU;
decoding (204) a signaling field encoded in a preamble of the DL PPDU, wherein the signaling field indicates which of a plurality of sub-channels is punctured for transmission of the DL PPDU, wherein the plurality of sub-channels are arranged in a primary channel group and three secondary channel groups, the primary channel group comprises a primary sub-channel and three secondary sub-channels, each of the three secondary channel groups comprises four secondary sub-channels, wherein the signaling field comprises four secondary puncturing bits for each of the secondary channel groups indicate which of the secondary sub-channels of the respective secondary channel group is punctured.

6. The data processor according to claim 5, the primary channel group having an 80MHz bandwidth, BW, and each of the secondary channel groups having an 80MHz BW.

7. The data processor according to claim 5 or 6, wherein each of the plurality of sub-channels having a 20MHz BW.

8. The data processor according to any one of claims 5 to 7, wherein the data processor comprises a memory for storing the instructions.

## Patentansprüche

1. Datenprozessor zum Ausführen einer Vielzahl von Anweisungen, um den folgenden Vorgang durchzuführen:
Codieren (102) eines Signalisierungsfeldes, um anzugeben, welcher von einer Vielzahl von Unterkanälen für die Übertragung einer Downlink-Protokolldateneinheit der physischen Schicht, DL-PPDU, punktiert ist, wobei die Vielzahl von Unterkanälen in einer primären Kanalgruppe und drei sekundären Kanalgruppen angeordnet ist, wobei die primäre Kanalgruppe einen primären Unterkanal und drei sekundäre Unterkanäle umfasst, jede der drei sekundären Kanalgruppen vier sekundäre Unterkanäle umfasst, wobei das Signalisierungsfeld vier sekundäre Punktierungsbits für jede der sekundären Kanalgruppen umfasst, die angeben, welcher der sekundären Unterkanäle der jeweiligen sekundären Kanalgruppe punktiert ist;
Konfigurieren (104) einer Präambel der DL-PPDU, wobei die Präambel das codierte Signalisierungsfeld beinhaltet; Übertragen (106) der DL-PPDU.

2. Datenprozessor nach Anspruch 1, wobei die primäre Kanalgruppe eine Bandbreite (BW) von 80 MHz aufweist, und jede der sekundären Kanalgruppen eine BW von 80 MHz aufweist.

3. Datenprozessor nach Anspruch 1 oder 2, wobei jeder der Vielzahl von Unterkanälen eine BW von 20 MHz aufweist.

4. Datenprozessor nach einem der Ansprüche 1 bis 3, wobei der Datenprozessor einen Speicher zum Speichern der Anweisungen umfasst.

5. Datenprozessor zum Ausführen einer Vielzahl von Anweisungen, um den folgenden Vorgang durchzuführen:
Empfangen (202) einer Downlink-Protokolldateneinheit der physischen Schicht, DL-PPDU;
Decodieren (204) eines in einer Präambel der DL-PPDU codierten Signalisierungsfeldes, wobei das Signalisierungsfeld angibt, welcher von einer Vielzahl von Unterkanälen für die Übertragung der DL-PPDU punktiert ist, wobei die Vielzahl von Unterkanälen in einer primären Kanalgruppe und drei sekundären Kanalgruppen angeordnet ist, die primäre Kanalgruppe einen primären Unterkanal und drei sekundäre Unterkanäle umfasst, jede der drei sekundären Kanalgruppen vier sekundäre Unterkanäle umfasst, wobei das Signalisierungsfeld vier sekundäre Punktierungsbits für jede der sekundären Kanalgruppen umfasst, die angeben, welcher der sekundären Unterkanäle der jeweiligen sekundären Kanalgruppe punktiert ist.

6. Datenprozessor nach Anspruch 5, wobei die primäre Kanalgruppe eine Bandbreite (BW) von 80 MHz aufweist, und jede der sekundären Kanalgruppen eine BW von 80 MHz aufweist.

7. Datenprozessor nach Anspruch 5 oder 6, wobei jeder der Vielzahl von Unterkanälen eine BW von 20 MHz aufweist.

8. Datenprozessor nach einem der Ansprüche 5 bis 7, wobei der Datenprozessor einen Speicher zum Speichern der Anweisungen umfasst.

## Revendications

1. Processeur de données destiné à exécuter une pluralité d'instructions pour effectuer l'opération suivante :
le codage (102) d'un champ de signalisation pour indiquer lequel d'une pluralité de sous-canaux est perforé pour la transmission d'une unité de données de protocole de couche physique de liaison descendante, DL PPDU, dans lequel la pluralité de sous-canaux sont agencés dans un groupe de canaux primaires et trois groupes de canaux secondaires, le groupe de canaux primaires comprend un sous-canal primaire et trois sous-canaux secondaires, chacun des trois groupes de canaux secondaires comprend quatre sous-canaux secondaires, dans lequel le champ de signalisation comprend quatre bits de perforation secondaires pour chacun des groupes de canaux secondaires indiquant lequel des sous-canaux secondaires du groupe de canaux secondaires respectif est perforé ;
la configuration (104) d'un préambule de la DL PPDU, dans lequel le préambule comporte le champ de signalisation codé ; la transmission (106) de la DL PPDU.

2. Processeur de données selon la revendication 1, le groupe de canaux primaires ayant une bande passante, BW, de 80 MHz, et chacun des groupes de canaux secondaires ayant une BW de 80 MHz.

3. Processeur de données selon la revendication 1 ou 2, dans lequel chacun de la pluralité de sous-canaux ayant une BW de 20 MHz.

4. Processeur de données selon l'une quelconque des revendications 1 à 3, dans lequel le processeur de données comprend une mémoire pour stocker les instructions.

5. Processeur de données destiné à exécuter une pluralité d'instructions pour effectuer l'opération suivante :
la réception (202) d'une unité de données de protocole de couche physique de liaison descendante, DL PPDU ;
le décodage (204) d'un champ de signalisation codé dans un préambule de la DL PPDU, dans lequel le champ de signalisation indique lequel d'une pluralité de sous-canaux est perforé pour la transmission de la DL PPDU, dans lequel la pluralité de sous-canaux sont agencés dans un groupe de canaux primaires et trois groupes de canaux secondaires, le groupe de canaux primaires comprend un sous-canal primaire et trois sous-canaux secondaires, chacun des trois groupes de canaux secondaires comprend quatre sous-canaux secondaires, dans lequel le champ de signalisation comprend quatre bits de perforation secondaires pour chacun des groupes de canaux secondaires indiquant lequel des sous-canaux secondaires du groupe de canaux secondaires respectif est perforé.

6. Processeur de données selon la revendication 5, le groupe de canaux primaires ayant une bande passante, BW, de 80 MHz, et chacun des groupes de canaux secondaires ayant une BW de 80 MHz.

7. Processeur de données selon la revendication 5 ou 6, dans lequel chacun de la pluralité de sous-canaux ayant une BW de 20 MHz.

8. Processeur de données selon l'une quelconque des revendications 5 à 7, dans lequel le processeur de données comprend une mémoire pour stocker les instructions.
